# EUROPEAN PATENT SPECIFICATION

(11) **EP 0 323 889 B1**
(45) Date of publication and mention of the grant of the patent: **21.04.1993**
(21) Application number: 89300021.6
(22) Date of filing: 04.01.1989
(51) Int. Cl.: B60T 8/66, B60T 8/88, B60T 11/20

(54) **Bleeding of anti-skid braking systems**
Entlüftung eines Antischleuderbremssystems
Désaération d'un système de freins antidérapage

(30) Priority: 08.01.1988 GB 8800389
(43) Date of publication of application: 12.07.1989
(73) Proprietor: LUCAS INDUSTRIES public limited company, Birmingham, B19 2XF West Midlands (GB)
(72) Inventor: Hurst, David Charles, Knowle Solihull Warwickshire (GB)
(74) Representative: Huntingford, David Ian

(56) References cited:
- EP-A- 0 196 808
- Bosch Zünder 1/1986 J.Gerstenmeier, "ABS-Elektronik heute und morgen"

## Description

This invention relates to the bleeding of anti-skid braking systems wherein brake fluid is to be inserted into the brake fluid circuit or circuits of the braking system during initial installation and/or maintenance procedures.

Anti-skid braking is discussed in general terms in the article "ABS-Electronik heute und morgen", Bosch Zünder 1/1986 J.Gerstenmeier, where the basic operation is described wherein an electronic control unit recognises from the vehicle wheel revolutions pattern that a wheel locking situation is developing and controls the flow of brake fluid within the system so as to relieve the transmission of brake fluid from a main brake cylinder to the individual wheel brake actuators.

In practice, it is known for such systems to include a dump valve which is energised, under the control of the electronic control circuit when excessive wheel deceleration is sensed during braking, to relieve brake pressure. The dump valve on energisation releases brake fluid into a secondary fluid circuit which may include an accumulator and a pump. An example of this type of known system is described in GB Patent Specification GB-A- 1243523.

With such a system, the secondary fluid circuit is normally completely isolated from the main fluid circuit which connects the master cylinder to the brake slave cylinder(s) in conventional manner. This gives rise to difficulties during initial installation of a braking system and during maintenance procedures in that any air in the secondary circuit cannot readily be removed by the normal bleeding operations. Some manufacturers of braking systems overcome this problem by supplying their systems with the secondary circuit pre-filled with brake fluid wherein others provide an additional by-pass valve which can be actuated manually during bleeding to permit fluid to by-pass the dump valve.

It has been found by the applicants that neither of these solutions is satisfactory and it is therefore an object of the present invention to provide an anti-skid braking system with an arrangement whereby a normally isolated secondary fluid circuit thereof can be readily bled.

In accordance with the invention there is provided an anti-skid braking system for a wheeled vehicle comprising a dump valve arranged to be actuated by an electronic control circuit which responds, when in an anti-skid responsive mode, to excessive vehicle wheel deceleration to release pressurised brake fluid into a secondary fluid circuit which is isolated from a main brake fluid circuit except when said dump valve is actuated, wherein said electronic control circuit has a bleed operation mode which is selectable for enabling brake fluid to be inserted into both said main and secondary fluid circuits during initial installation and maintenance procedures when the associated vehicle is stationary, and in which the electronic control circuit includes means for opening the dump valve during said bleed operation mode and means for cancelling said bleed operation mode and returning to the anti-skid responsive mode in the event that input signals to the control circuit indicate that the vehicle to which the system is fitted is in motion.

Preferably, said electronic control circuit is arranged so as, when said bleed operation mode has been entered, to return to a normal operation mode after a predetermined time interval, which may be arranged to recommence on each operation of the brake pedal.

Where the electronic control circuit has a diagnostic interface, setting of the control circuit into the bleed operation mode can conveniently be effected by providing a temporary link connection between an output of such interface and an input thereof.

Preferably, the dump valve is not energised continuously during operation of the control circuit in the bleed operation mode, but is pulsed intermittently.

Some conventional anti-skid braking systems include two solenoid valves in each channel, one valve being a normally open valve which connects the master cylinder to the brake slave cylinder and the other being a normally closed dump valve. With such a system, the electronic control circuit would be arranged so as in the bleed operation mode to energise the normally open valve and the dump valve alternatively.

Other conventional systems, however, include a dump valve operated by the electronic control circuit and a normally open shut-off valve which is fluid pressure actuated in response to opening of the dump valve. The present invention is equally applicable to such systems.

In a multi-channel system, where there are two or more dump valves, the electronic control circuit would be arranged to energise the dump valves of different channels at different times during bleed operation mode.

Preferably, the software which controls the control circuit is arranged to test whether bleed operation mode has been demanded on start up of the system.

The invention is described further hereinafter, by way of example only, with reference to the accompanying drawings, in which:-
Figure 1 is a diagram of one example of an anti-skid braking system in accordance with the invention;
Figure 2 is a block diagram of an electronic control circuit forming part of the system;
Figure 3 is an outline flow chart of the software of the electronic control circuit;
Figure 4 shows timing diagrams for both evacuate and fill operations and manual bleed operations;
Figure 5 shows highly diagrammatically a multi-channel system to which the present invention is applicable; and
Figure 6 is a timing chart showing one possible timing scheme for a two-channel system.

The braking system (of which a single channel is shown) includes two solenoid valves 10,11, one of which 10 is a normally open inlet valve 10 which connects the brake master cylinder 12 to the brake slave cylinder 13. The valve 11, is a normally closed dump valve which connects the slave cylinder 13 to a low pressure accumulator 14 from which fluid can be returned to the main fluid circuit by a pump 15. The two valves 10 and 11 are both controlled by an electronic control circuit 16 which has an input from a wheel speed sensor S₁.

The control circuit 16 operates in generally known manner to energise the solenoids of both valves 10 and 11 when an excessive wheel decelaration level is detected. This results in communication between the brake master and slave cylinders being blocked and pressurised fluid in the slave cylinder being released into the accumulator 14 to reduce the braking effort and avoid wheel skid. The pump is also controlled by the electronic control circuit.

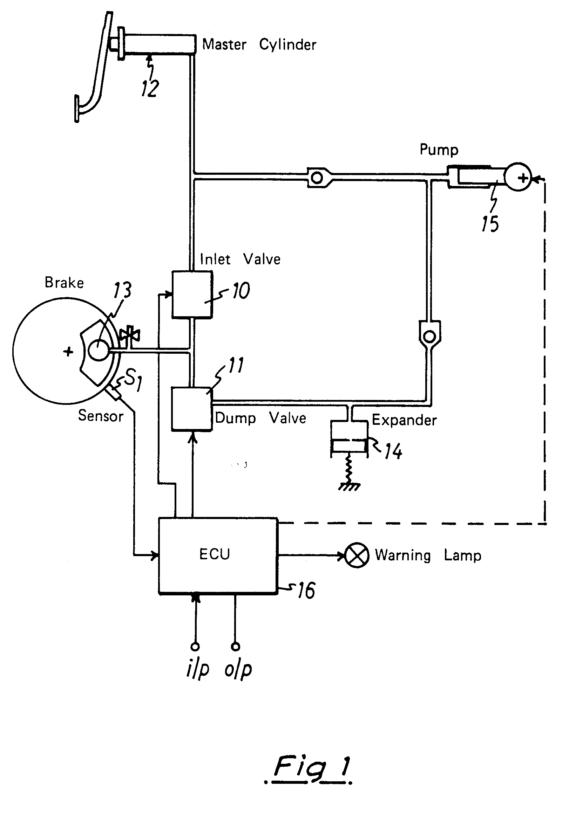

It is to be noted that the system shown in Figure 1 is simply one example of a system to which the invention is applicable. It is also applicable to systems in which only the dump valve 11 is solenoid actuated, the valve 10 being a fluid pressure actuated valve which is closed by the pressure drop which occurs when the valve 11 is open. It is, moreover, also applicable to systems in which the pump 15 is mechanically driven either by the vehicle wheels or by the engine.

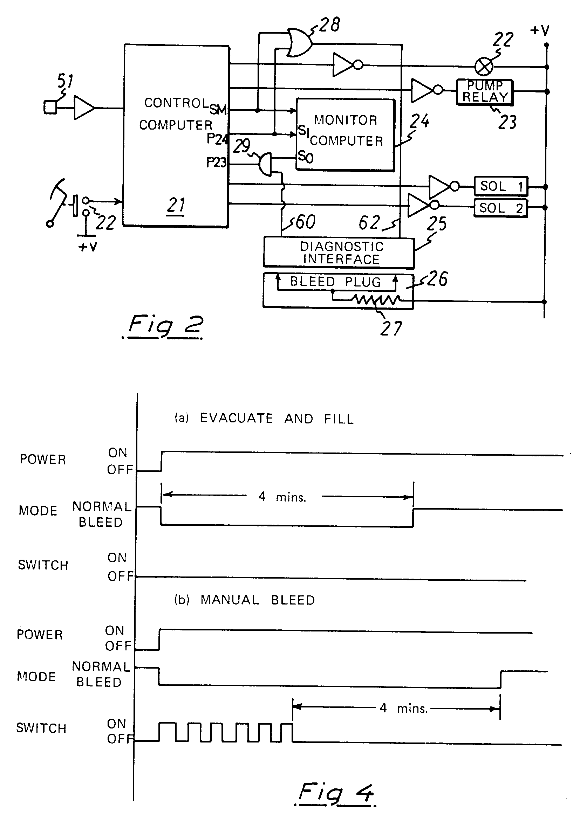

Turning now to Figure 2, the control circuit is shown here in more detail. This circuit includes a microcomputer 21 which receives an input from the sensor S₁, such input being in the form of a pulse train, the computer measuring the period of the pulse train and storing values of this period so that it can calculate the rate of change of the wheel speed in generally known manner. The computer also has an input from a brake pedal switch 22.

There are outputs from the computer 21 to drive a lamp 22, to drive a pump relay 23 and to drive the two solenoids SOL₁ and SOL₂ of the respective valves 10 and 11. As shown, the computer 21 is also associated with a monitoring computer 24 which maintains a cyclic checking routine in which data is passed to and received from the computer 21 and a running check on this data is kept. This latter system is described in more detail in our European Patent Application EP-A-0.322.141 to which reference is hereby directed. The terminals of the computer 21 which supply and receive this data (labelled P₂₄ and P₂₃ in Figure 2) also pass data cyclically to a diagnostic interface 25 via OR gates 28 and 29 and can receive stimulus data therefrom when this interface is connected to a diagnostic circuit (not shown). For convenience, this diagnostic interface is used in the present case to signal when the circuit is to be required to operate in a bleed operation mode, instead of its normal anti-skid operation mode. To this end, a bleed plug 26 can be inserted into the diagnostic interface socket, such bleed plug providing a direct link between the output terminal at which diagnostic output signals from terminal P₂₄ of the main computer 21 are outputted, and an input terminal via which signals from the diagnostic circuit are inputted to terminal P₂₃ of the computer. This link is connected by a pull-up resistor 27 to the vehicle +12V supply (the computer output circuits e.g. OR gate 28 being open collector or equivalent type devices). The pull-up resistor 27 may be unnecessary in some systems. With this arrangement, any signals output at the diagnostic output will be routed directly back to the diagnostic input and thence to the computer 21.

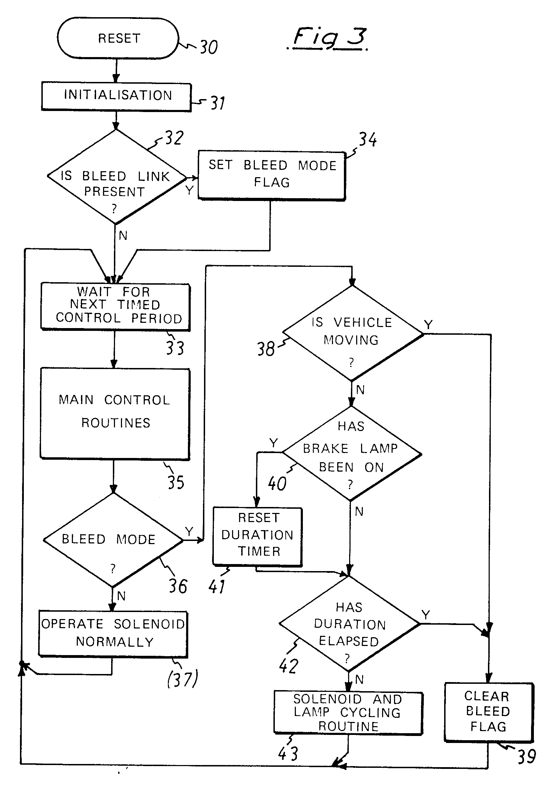

The software of computer 21 is shown very generally in Figure 3. Such software includes initialisation routines 31 which are carried out at reset 30 whenever power is supplied to the computer after a period of disconnection (usually effected by the vehicle ignition switch). Following these initialisation routines, the computer tests 32 to check if the bleed link 26 is present by sending data at the appropriate instant and checking that the identical data is received via the diagnostic interface. If no link is found to be present the program begins the normal anti-skid operation cycle by entering a "wait" routine 33 where a cycle timer signal is awaited.

If the link is found to be present then a "bleed" flag is set 34 before the program enters the wait routine 33. After executing the main control routines 35, the program interrogates the bleed flag 36 and if the flag is found to be set, the program jumps to a bleed mode routine instead of executing the normal solenoid operation routine 37. In the bleed mode routine, a check 38 is first made to establish whether the vehicle is moving. If it is then the bleed flag is cleared 39 and the program returns to the wait routine 33. If the vehicle is not moving, then a check 40 is made to see if the brake switch 22 has been operated during the preceding program cycle. If not then a check 42 is made to see if a four minute duration timer has timed out. If the brake pedal has been operated, the four minute duration timer is restarted 41 before check 42 is made. If the timer is found to have timed out, the bleed flag is cleared 39; if not, then a solenoid and lamp cycling routine 43 is executed before returning to routine 33. In the cycling routine, various timers are incremented to control energisation of the two solenoids SOL₁ and SOL₂ and the lamp 22.

By way of example, solenoid SOL₁ may be energised for about 250mS, followed by a period of 250mS in which the lamp is energised, followed by 250mS during which SOL₂ is energised, followed by another 250mS of lamp energisation, and so on.

The overall cycle time set by the wait routine 33 may be about 8mS.

Thus, when the link is in position, normal anti-skid operation is not commenced at power up, but the above mentioned intermittent solenoid operation cycle is commenced. Whilst the valves are being cyclically operated in this way, the hydraulic system can be filled by the usual arrangement of evacuating the hydraulic system of air (using a vacuum pump) and then introducing the brake fluid. If the filling operation takes more than four minutes, the period can be started again by switching off the vehicle ignition switch and then switching it on again with the bleed link in position.

If the initial vacuum fill is found later to be unsatisfactory, the system is reset with the bleed link in position and a pressure fill is carried out (i.e. fluid under pressure is introduced whilst the brake bleed valves are open).

Subsequent manual bleeding can be carried out normally, i.e. by pumping the brake pedal whilst the bleed valves are open. This may take more than four minutes and this is why the four minute period is restarted on every operation of the brake pedal.

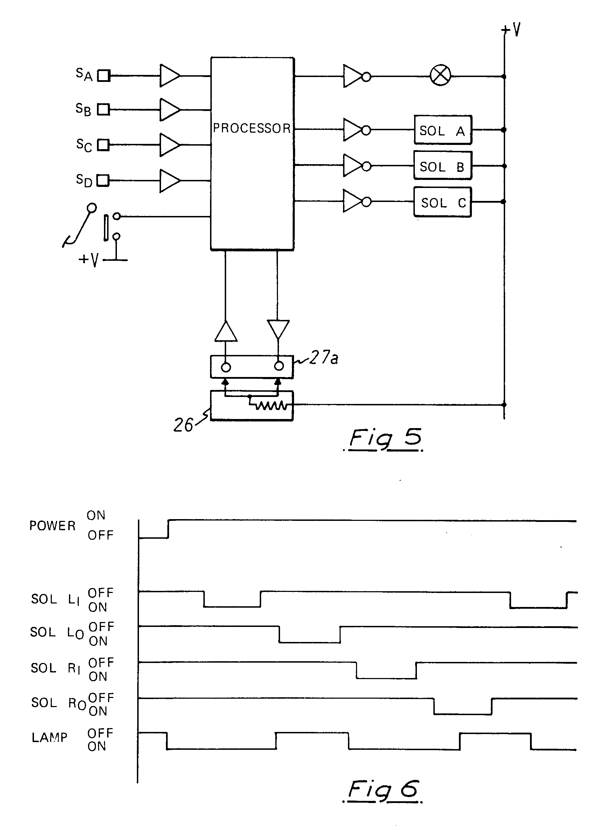

Figure 4 shows timing diagrams for both (a) evacuate and fill and (b) manual bleed operations. During the former operation, the brake switch is not actuated so that bleed mode terminates after four minutes starting from reset. In the manual mode, repeated brake switch operations reset the four minute time to prolong the bleed mode operation, which terminates four minutes after the last brake operation.

If the filling operation is completed with part of the four minute period remaining, normal anti-skid operation can be restored, simply by moving the vehicle away.

If the link is accidentally left in position, the bleed operation mode will be entered on every power-up, but will be exited as soon as the vehicle is moved away. The software is arranged to continue to energise the lamp intermittently in this condition.

Although the system described above is a single channel system it will be understood that the invention is equally applicable to multi-channel systems. In such systems the software is preferably arranged to ensure that the solenoids of different channels are energised at different times, with or without quiescent periods between such operations.

By way of example, Figure 5 shows a multi-channel system which has four wheel speed sensors SA, SB, SC and SD and three solenoid operated vales SOLA, SOLB and SOLC. The details of the processor are not shown, but this may include main and monitoring microprocessors as in Figure 2, or parallel, cross-checking processors or if a sufficiently reliable processor is available, merely a single processor. In any event, an output from and an input to the processor is provided for the bleed link 26, either through an existing diagnostic interface as in Figure 2 or through a special connector 27a.

Figure 6 is a timing chart showing a possible timing scheme for a two channel system with an inlet valve solenoid and a dump valve solenoid in each channel. The upper trace shows the commencement of operation by the switching on of the power supply. The next four traces show the energisation periods for the four solenoid LI (left input), LD (left dump), RI (right input) and RD (right dump) and the bottom trace shows the lamp energisation periods. It will be seen that the solenoids are energised one after another with quiescent periods between such energisations. In this case the lamp energisation is not synchronised with the solenoid energisations.

## Claims

1. An anti-skid braking system for a wheeled vehicle comprising a dump valve (11) arranged to be actuated by an electronic control circuit (16) which responds, when in an anti-skid responsive mode, to excessive vehicle wheel deceleration to release pressurised brake fluid into a secondary fluid circuit which is isolated from a main brake fluid circuit except when said dump valve (11) is actuated, characterised in that said electronic control circuit (16) has a bleed operation mode which is selectable for enabling brake fluid to be inserted into both said main and secondary fluid circuits during initial installation and maintenance procedures when the associated vehicle is stationary, and in which the electronic control circuit includes means for opening the dump valve (11) during said bleed operation mode and means for cancelling said bleed operation mode and returning to the anti-skid responsive mode in the event that input signals to the control circuit indicate that the vehicle to which the system is fitted is in motion.

2. An anti-skid braking system as claimed in claim 1, wherein said electronic control circuit (16) is arranged so as, when said bleed operation mode has been entered, to return to a normal operation mode after a predetermined time interval.

3. An anti-skid braking system as claimed in claim 2, wherein said predetermined time interval is arranged to recommence on each operation of the brake pedal (12).

4. An anti-skid braking system as claimed in any of claims 1 to 3, wherein the electronic control circuit (16) has a diagnostic interface (25), and wherein the setting of the control circuit (16) into the bleed operation mode is effected by providing a temporary link connection (26) between an output (60) of such interface (25) and an input (62) thereof.

5. An anti-skid braking system as claimed in any of claims 1 to 4, wherein the dump valve (11) is not energised continuously during operation of the control circuit in the bleed operation mode, but is pulsed intermittently.

6. An anti-skid braking system as claimed in claim 1 which includes two solenoid valves in each channel, one valve (10) being a normally open valve which connects the master cylinder (12) to the brake slave cylinder (13) and the other (11) being a normally closed dump valve, and wherein, the electronic control circuit (16) is arranged so as in the bleed operation mode to energise the normally open valve (10) and the dump valve (11) alternately.

## Patentansprüche

1. Antischleuder-Bremssystem für ein Radfahrzeug, mit einem Ablaßventil ((11), das zur Betätigung durch eine elektronische Steuerschaltung (16) ausgelegt ist, die in einer Antischleuder-Reaktionsbetriebsart auf übermäßige FahrzeugradVerzögerung in der Weise reagiert, daß sie unter Druck stehendes Bremsfluid in einen Sekundär-Fluidkreis ablaufen läßt, der, außer bei betätigtem Ablaßventil (11), von einem HauptBremsfluidkreis getrennt ist, dadurch gekennzeichnet, daß die elektronische Steuerschaltung (16) eine Entlüftungs-Betriebsart hat, die anwählbar ist, um das Einfüllen von Bremsfluid sowohl in den Haupt-Fluidkreis als auch den Sekundär-Fluidkreis während anfänglicher Installations- und bei Wartungsarbeiten zu ermöglichen, wenn das zugehörige Fahrzeug stillsteht, und bei dem die elektronische Steuerschaltung Einrichtungen zum Öffnen des Ablaßventils (11) während der Entlüftungs-Betriebsart und Einrichtungen zum Aufheben der Entlüftungs-Betriebsart und zum Zurückkehren in die AntischleuderReaktionsbetriebsart für den Fall aufweist, daß Eingangssignale zur Steuerschaltung anzeigen, daß das Fahrzeug, an dem das System angebaut ist, in Bewegung ist.

2. Antischleuder-Bremssystem nach Anspruch 1, bei dem die elektronische Steuerschaltung (16) so ausgebildet ist, daß nach Eingabe der Entlüftungs-Betriebsart, nach einer vorbestimmten Zeitspanne in eine normale Betriebsart zurückgekehrt wird.

3. Antischleuder-Bremssystem nach Anspruch 2, bei dem die vorbestimmte Zeitspanne so ausgelegt ist, daß sie bei jeder Betätigung des Bremspedals (12) erneut beginnt.

4. Antischleuder-Bremssystem nach einem der Ansprüche 1 bis 3, bei dem die elektronische Steuerschaltung (16) eine Diagnose-Schnittstelle (25) aufweist, und bei der das Umschalten der Steuerschaltung (16) auf Entlüftungs-Betriebsart durch Vorsehen einer temporären Zwischenverbindung (26) zwischen einem Ausgang (60) dieser Schnittstelle (25) und einem Eingang (62) von ihr durchgeführt wird.

5. Antischleuder-Bremssystem nach einem der Ansprüche 1 bis 4, bei dem das Ablaßventil (11) während des Betriebs der Steuerschaltung in der Entlüftungs-Betriebsart nicht ständig erregt ist, sondern intermittierend stoßweise arbeitet.

6. Antischleuder-Bremssystem nach Anspruch 1, das in jedem Kanal zwei Elektromagnet-Ventile aufweist, wobei ein Ventil (10) ein normalerweise geöffnetes Ventil ist, welches den Hauptzylinder (12) mit dem Bremsen-Nehmerzylinder (13) verbindet, und das andere Ventil (11) ein normalerweise geschlossenes Ablaßventil ist, und bei dem die elektronische Steuerschaltung (16) so ausgelegt ist, daß sie in der Entlüftungs-Betriebsart das normalerweise geöffnete Ventil (10) und das Ablaßventil (11) abwechselnd erregt.

## Revendications

1. Système de freins anti-dérapage destine à un véhicule à roues comportant une vanne de décharge (11) aménagée de façon à être actionnée par un circuit de commande électronique (16) qui répond, lorsqu'il est dans un mode sensible à l'anti-dérapage, à une décélération excessive des roues du véhicule en dirigeant le liquide de freins sous pression dans un circuit de liquide secondaire qui est isolé d'un circuit de liquide de freins principal sauf lorsque ladite vanne de décharge (11) est actionnée, dans lequel ledit circuit de commande électronique (16) possède un mode de fonctionnement de purge qui peut être choisi afin de permettre au liquide de freins d'être introduit à la fois dans lesdits circuits principal et secondaire durant la mise en service initiale et les procédures de maintenance quand le véhicule associé est immobile, et dans lequel le circuit de commande électronique comporte un dispositif destiné à ouvrir la vanne de décharge (11) durant ledit mode de fonctionnement de purge et un dispositif destine à interrompre ledit mode de fonctionnement de purge et à revenir au mode sensible à l'anti-dérapage dans le cas où des signaux entrant dans le circuit de commande indiquent que le véhicule auquel est adapte le système est en mouvement.

2. Système de freins anti-dérapage selon la revendication 1, dans lequel ledit circuit de commande électronique (16) est aménage, lorsque ledit mode de fonctionnement de purge a été actionné, de façon à revenir à un mode de fonctionnement normal après un intervalle de temps prédéterminé.

3. Système de freins anti-dérapage selon la revendication 2, dans lequel ledit intervalle de temps prédéterminé est aménagé de façon à être actionné à nouveau lors de chaque action sur la pédale de freins (12).

4. Système de freins anti-dérapage selon l'une quelconque des revendications 1 à 3, dans lequel le circuit de commande électronique (16) possède un interface de diagnostic (25), et dans lequel le forçage du circuit de commande (16) dans le mode de fonctionnement de purge est effectué en prévoyant pour cela un lien de connexion temporaire (26) entre la sortie (60) d'un tel interface (25) et l'entrée (62).

5. Système de freins anti-dérapage selon l'une quelconque des revendications 1 à 4, dans lequel la vanne de décharge (11) n'est pas actionnée de façon continue durant le fonctionnement du circuit de commande dans le mode de fonctionnement de purge, mais elle reçoit des impulsions par intermittence.

6. Système de freins anti-dérapage selon la revendication 1, comportant deux vannes à solénoïde dans chaque canal, une vanne (10) étant une vanne normalement ouverte qui relie le maître-cylindre (12) au cylindre de frein esclave (13) et l'autre (11) étant une vanne de décharge normalement fermée. Avec un tel système, le circuit de commande électronique (16), dans le mode de fonctionnement de purge, doit être aménagé de façon à alimenter alternativement la vanne normalement ouverte (10) et la vanne de décharge (11).
